# EUROPEAN PATENT APPLICATION

(11) **EP 3 136 275 A1**
(43) Date of publication of application: **01.03.2017**
(21) Application number: 15306327.6
(22) Date of filing: 28.08.2015
(51) Int. Cl.: G06F 21/35, G06F 21/36, G06F 21/83, G06F 21/84

(54) **DIGITAL AUTHENTICATION USING AUGMENTED REALITY**

(71) Applicant: Thomson Licensing, 92130 Issy-les-Moulineaux (FR)
(72) Inventor: ALLEAUME, Vincent, 35576 Cesson Sevigne CEDEX (FR); BELLOT, Maximilien, 35576 Cesson Sevigne CEDEX (FR); LAURENT, Anthony, 35576 Cesson Sevigne CEDEX (FR)
(74) Representative: Huchet, Anne

(57) **Abstract**

An augmented reality (AR) interactive system and method is provided. In one embodiment the systems comprises a user interface configured to receive user input, a processor configured to manage user input data, and a display in processing communication with one another and said user interface via said processor. The processor is operative to perform the following functions: initiate communication with at least one third party computer to start a user session; and display graphical images and textual information in overlying registration using the display so that the images and textual information appear as part of a plurality of computer keys of a computer keyboard, wherein the processor is configured to display computer keys in random order each time the keys are displayed.

## Description

### TECHNICAL FIELD

The present disclosure relates generally to an augmented reality interactive system and more generally to an augmented reality interactive system used for digital authentication.

### BACKGROUND

This section is intended to introduce the reader to various aspects of art, which may be related to various aspects of the present invention that are described and/or claimed below. This discussion is believed to be helpful in providing the reader with background information to facilitate a better understanding. Accordingly, it should be understood that these statements are to be read in this light, and not as admissions of prior art.

As computer use becomes more prevalent, concerns over maintaining data security grows increasingly. Data security measures need to be provided to protect privileged information from access, use, disclosure, disruption, modification, and destruction by unauthorized individuals and entities. Loss of important information can be detrimental to both individuals and businesses. Security attacks may be software based and include uses of viruses and worms. Equipment theft and hardware driven destruction of components have also been used to access sensitive information.

Financial institutions such as banks are very concerned about such attacks and the associated loss of privileged data. Consequently, these institutions have developed different techniques to ensure a more secure interaction with their customers. For example, some banks demand a security code before a user session is initiated to ensure that the transaction is conducted by an authorized person. Nonetheless, the integrity of such security codes still remains subject to both hardware and software attacks. A number of attacks have been made recently using spying devices that intercept some of the physical card information of a credit card or a mobile device using methods such as video captures, magnetic sensing devices and others in seemingly secure locations. In other cases, where credit card payments are made at a merchant location, altered card readers and keyboard capture software have been used to access confidential information or obtain authorization from the user's card or account surreptitiously. Mobile devices, such as smart phones, have also been successfully integrated in some of these attacks to obtain account information from bank branches and automated teller machines (ATM)s.

Consequently, it is important to develop technology that maintains both data integrity and security especially in instances where sensitive data is being stored or exchanged via a computer or mobile device.

### SUMMARY

An augmented reality (AR) interactive system and method is provided. In one embodiment the AR interactive system comprises a user interface configured to receive user input and a processor configured to manage data based user input. A camera and a display are also provided that are in processing communication with one another and the user interface via the processor. The processor is operative to initiate a user session and to display graphical images and textual information in overlying registration using the camera and display so that the images and textual information appear as part of a plurality of computer keys of a computer keyboard. The processor is configured to display the computer keys in random order each time the keys are displayed.

In a different embodiment, a method of providing authentication using an augmented reality interactive system is provided. The method comprises initiating via a processor communication to authenticate a user session. It also comprises displaying via the processor graphical images and textual information in overlying registration with imagery from a camera to a user, such that the images and textual information appear as part of a computer key from a computer keyboard on a rendering surface of a head mounted user device. The method further comprises registering via the processor user key selection through user movements or voice captured by a motion sensor and/or microphone. The motion sensor and microphone is in processing communication with the processor. The processor authenticates the user session

In another embodiment, an augmented reality (AR) interactive system is provided that comprises a head mounted user interface configured to receive user input. The head mounted user interface has a motion sensor, a microphone and a touch interaction area for capturing user input in form of voice, movement or touch. A display is also provided that is in processing communication with one another and the user interface via the processor. The processor is operative to start a user session and to display graphical images and textual information in overlying registration using the video camera and the display so that the images and textual information appear as part of a plurality of computer keys of a computer keyboard. The computer keys appear in random order each time the keys are displayed.

In yet another embodiment, an augmented reality (AR) interactive system is provided comprising user interface means configured to receive user input in form of voice, movement or touch. It also comprises display means in processing communication with a processor (140). The processor is operative to perform the following functions: initiate a user session; and display graphical images and textual information in overlying registration using said display means so that said images and said textual information appear as a plurality of computer keys of a computer keyboard, wherein said processor is configured to display said computer keys in random order each time said keys are displayed.

Additional features and advantages are realized through the techniques of the present disclosure. Other embodiments and aspects of the invention are described in detail herein and are considered a part of the claimed invention. For a better understanding of the invention with advantages and features, refer to the description and to the drawings.

### BRIEF DESCRIPTION OF THE DRAWINGS

The invention will be better understood and illustrated by means of the following embodiment and execution examples, in no way limitative, with reference to the appended figures on which:
Figure 1 depicts an augmented reality (AR) interactive system in accordance with an illustrative embodiment;
Figure 2A depicts a traditional number keyboard using a basic layout and Figure 2B provides a coordinating virtual keyboard display to that of Figure 2A having an extended layout;
Figure 3A depicts a traditional key stroke entry for a pin code using the keyboard layout of Figure 2A and Figure 3B uses the same using the keyboard layout display of Figure 2B wherein the user enters the code as well as extra characters;
Figure 4 depicts succeeding screen captures of an exemplary nature illustrating user input key strokes for providing a user authentication code or password in accordance with an illustrative embodiment; and
Figure 5A depicts a virtual keyboard layout display for a left handed interaction as per one embodiment and Figure 5B depicts a virtual keyboard layout display for a right handed interaction.

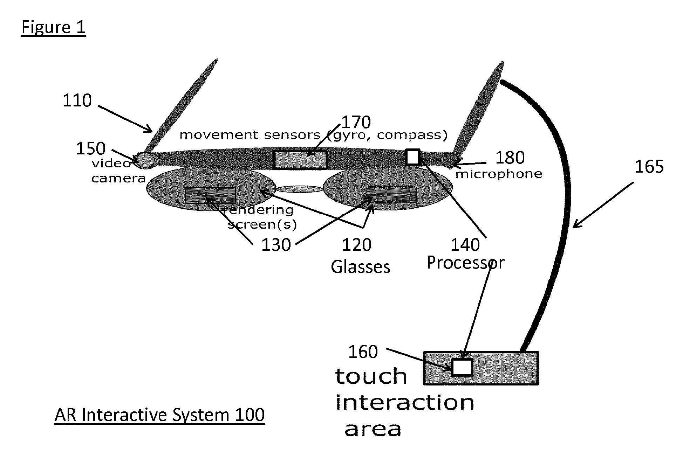

In Figures 1-5, the represented figures provide examples that are purely functional entities and do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

### DESCRIPTION

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modification.

Figure 1 is a depiction of an augmented reality (AR) interactive system 100 as in accordance with an illustrative embodiment. The AR interactive system 100 comprises a processor 140 that operates in conjunction with a user interface and a display. The user interface in Figure 1, comprises of different components that can receive user input in different forms such as touch, voice and body movement. In alternate embodiments, other user input can be added or alternatively one or a subset of them can be accepted.

The user interface in the embodiment of Figure 1 comprises a head mounted user interface 110 in processing communication with a touch interactive area 160, sensor(s) 170, camera(s) 150 and microphone(s) 180 via the processor 140. The sensor(s), in one embodiment can be a motion sensor but in other embodiments, the sensor(s) can be one of a variety of sensors that react to light, heat, moisture and/or also include gyros and compass components.

In the example depicted in Figure 1, a plurality of processors 140 are provided in communication with one another. As way of example, the processors are embedded in different areas, one in the touch interaction area 160 and another one in the head mounted components 110. However, this is only one embodiment. In alternate embodiments, only one processor can be used and the processor may be freestanding. In addition, the processor(s) can be in processing communication with other computers or computing environments and networks. In Figure 1, the camera 150 (such as a video camera) and the microphone(s) 180 can also provide the user with augmented reality images and sounds. (In one embodiment, video is displayed through means of pass-through devices)In the embodiment of Figure 1 the head mounted user interface 110 comprises a pair of see through glasses that include a screen referenced as rendering screen 130. The glasses, in one embodiment, may be ordinary glasses that are being worn by a user and rendering screens may be permanently and/or temporarily be added to them for use with the AR system 100.

Augmented reality (AR) systems such as the one depicted in Figure 1 at 100 provide a live direct or indirect view of a physical, real-world environment whose elements are augmented by computer processed or generated sensory input such as sound, video, graphics or other such data. In one embodiment, the augmented reality system 100 can be enhanced, modified or even diminished accordingly by a processor or computer, such as processor 140. In this way and with the help of advanced AR technology the real world information available to a user can be further enhanced through digital manipulation. Consequently, artificial information about a particular user's environment and its surrounding objects can be overlaid on the real world by digitally enhanced components.

In one embodiment as shown in Figure 1, the head mounted user interface 110 can physically connect the components discussed such as the microphone, video camera, touch interaction area, rendering screen and others. Some of these components may be provided separately but situated in one housing unit conveniently in some embodiments. For example, the touch interaction area 160 can be attached to the head mounted user interface 110 with an attachment 165. The attachment can be retractable and the interaction area itself may be provided in a complementary compartment in the head mounted user interface 110 in some embodiments. Alternatively, some or none of the components may be connected or collocated or housed in other embodiments as can be appreciated by those skilled in the art. Other embodiments can use additional components and multiple processors, computers, displays, sensors, optical devices, projection systems, and input devices that are in processing communication with one another as can be appreciated by those skilled in the art. Mobile devices such as smartphones and tablets which may include one or more cameras, micromechanical devices (MEMS) and GPS or solid state compass may also be used.

As indicated, Figure 1 is provided as an example but in alternative embodiments, components can be substituted and added or deleted to address particular selections preferences and/or needs. For example, in one embodiment, there is no need for the touch interaction area. The user can simply provide input by gestures alone due to the use of the sensors (as if typing in air). In another voice and gestures may be incorporated together. In other embodiments, one component may be substituted for another if it creates similar functionality. For example, the touch interaction area 160 may be substituted with a mobile device, such as a cell phone or a tablet and as indicated provide one or more processors. As also indicated with respect to the glasses, this interchangeability allows the users to incorporate everyday objects and devices that are used in conjunction with other ordinary uses into the system 100 to take full advantage or usability and portability.

Furthermore, the head mounted user interface 160 can be one of many alternatives that embed or allow the user to see a private screen through specialty lenses and may be a part of a head-mounted display (HMD), a headset, a harness, a helmet or other wearable and non-wearable arrangements as can be appreciated by those skilled in the art. In the alternative, none of the components may be connected physically or a subset of them may be physically connected selectively as can be appreciated by those skilled in the art.

Referring back to the embodiment of Figure 1, the sensor(s) 170, rendering screen or display 130, microphone(s) and camera 150 together as used in Figure 1, are aligned to provide virtual information to the user in a physical world capacity and will be responsive to adjust accordingly with the user's head or body movements to allow for an immersive and mobile experience. In addition, in the embodiment of Figure 1, the eyeglasses 120 and their display 130 (rendering screen) can include and are in processing communication with video camera 150 , in order to intercept the real world view and re-display its augmented view through the eye pieces. The real or virtual imagery can then be projected through or reflected off the surfaces of the eyewear lens pieces as can be appreciated.

The augmented reality system 100 of Figure 1, can be used in a variety of circumstances, especially where security is important. To aid understanding, one example will be provided. In situations where a user desires to obtain money from an automated teller machine (ATM), many people fear a breach of security for a variety of reasons. The ATM may be located in a public location where third parties may be able to easily intercept data by being in close proximity. Such proximity may allow keyboard captures through personal observation and recollection or through a device. Authentication identifications of a user can be obtained by unauthorized individuals using a variety of other techniques as well. For example, cameras can be installed in the vicinity of ATMs, regardless of their location to capture key stroke and body gestures that reveal security codes.

Whether done in person or with assistance of cameras and other wireless or actual devices, many instances of security breach occur directly by viewing and replicating keystrokes and other gestures and then correlating them to location of keys on a keyboard. These efforts reflect the need for providing security at least in two important manners. One is to assure that the use of public keyboards are limited and second is to provide measures that ensure users body gestures do not provide a key to providing security breaches. In a typical secured payment scheme, the following elements are typically involved in a user's payment device (payment card, phone with payment application, etc.), a device to interact with a store or bank which involve interaction with the device through a user input such as a physical input. An application server is also provided that will work with a payment module application through a database transaction management system and one or more related networks.

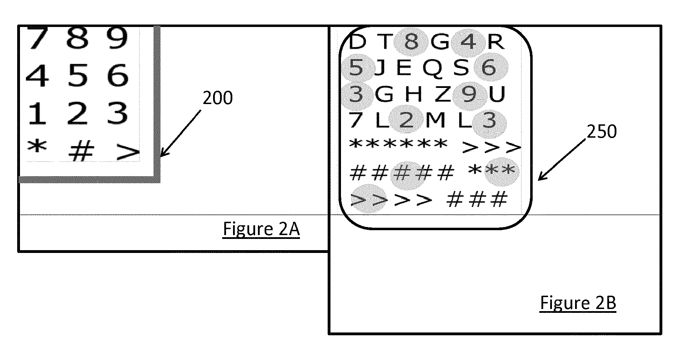

In one embodiment as shown in Figure 1, the AR interactive system 100 limits the need to use a physical input device such as the keyboard, touch screen or the like at a public place. For example, head movement in conjunction with a nod or angle of movement may enable interacting with an entire virtual keyboard that appears to the user alone and cannot be seen by the third party interceptors as will be discussed. This can now be discussed by referring to the examples of Figure 2.

In Figure 2A, a traditional number keyboard is depicted using a conventional layout. This layout can easily be captured or remembered by third party unauthorized users since such third party keyboards are common place and follow a familiar sequence of numbers. In Figure 2B, by contrast, a virtual keyboard is provided wherein the keys appear in random order that differ with each presentation to the user. The virtual keyboard can appear partially of fully to the user, so that the user can see it and interact with it using the touch interaction area or through other user interaction devices.

In Figure 2B, the highlighting of the characters is used to display user selection. In the example of Figure 2B, the touch interaction area is used primarily for selecting user input. In this embodiment, since the virtual keyboard is only visible to the user, as opposed to a physical keyboard that has keys visible at all times to others, it does not matter whether the user input is being watched in real time or stored as by way of keystrokes or films. In another embodiment, the virtual keyboard can appear such that the user can provide user selection through hand or body gestures as will be registered by the motion sensor(s) as provided in Figure 1 or through voice as captured by the microphone(s). In one embodiment, a mixture of user interfaces can be all used simultaneously to provide input.

In one embodiment, to ensure security, when using a voice user interface and input, the system does not require that the user spells the code in case it may be heard by an unauthorized third party interceptor. In one embodiment, the user may instead provide the index of the keys corresponding to the value he wants to select. For instance, in the example provided by the embodiment of Figure 2B, if the user wants to select the code "84", the user will pronounces the values "3" and "5" that are the indexes of the keys "8" and "4". In one embodiment, the key indexes are modified each time the user has to enter his code (or even between two values).

In one embodiment, it may even be possible for the user to type in the code in a dark environment to increase security of transaction. The user does not need to touch a real physical surface or object (keyboard), especially one that is placed in a public environment. User's password remains safely secured from external users' gestures' analysis, by taking care of and managing possible presence of repeated numbers or characters in that code. Such repeated numbers, or characters, would not require the user to virtually type the same space location during the process. In another embodiment, that randomized layout of keys may be reset by the application when screen is changed, or even after each key stroke (less convenient for the user, but even more secure)

In another embodiment, the is not touch interaction area but the keyboard appears on one of the user's hand and the user can use his/her other hand to input the digits by pressing his other hand just as if the user is typing on a touch pad or keyboard with the exception that the numbers that appear on his/her hand are only visible to the user and to anyone else who is not viewing the augmented reality environment.

Using the example where the user initiates a banking transaction via the ATM, the head mounted interactive device 110, or even the glasses 120 are enabled and configured via the processor to directly establish a processing connection with the ATM device, either directly or through first establishing a web access. In one example an associated phone can be used via a Bluetooth device that can even establish a direct connection between the glasses and the ATM device. In one embodiment, a unique tag may even being displayed that can be either visible or visible through the glasses or other arrangement as can be appreciated by those skilled in the art. In this embodiment, tag allows to uniquely identify the ATM in the vicinity of the user or user device, or other such situation as the particular device or user to interact with. When the user of the previous example needs money, he or she can get sufficiently close to the ATM, that is displaying the unique tag. A variety of arrangements, such as bar codes or specialized codes like the Quick Response Code (QR) or other two and three dimensional codes can be used. Most of these codes, as can be appreciated by one skilled in the art, may include a machine-readable optical label and reader that conveys information about the item or device to which it is attached. The code may have applications that can include product tracking, item identification, time tracking, document management, and even general marketing (examples of visual ones can be one that has a barcode or tag like QR code and can be read using glasses with an associated camera). In another embodiment, the tag can also be operating with a radiofrequency such as one that used in near field communication (NFC) technology. The NFC technology, through its unique set of protocols, enables smartphones and other devices to establish radio communication with each other by touching the devices together or bringing them into proximity to a very close distance (typically less than 10 cm). In such an embodiment, the user can also be retrofitted to embedding a related technology, such as through the use of the user's mobile device or even the same head mounted device and/or glasses.

In yet another embodiment, the user's device (glasses, mobile device etc.) may even be further enabled to select or recognize which service to connect to for setting up a more unique transaction (such as for money delivery). A user's complementary tag, in such an embodiment, may provide for instance directly a secure web link to connect to and even include personalized information such as the user will never want to receive bills larger than a hundred dollar bill. In one embodiment, in this example, once a connection is established in a secure way to the bank cash machine managing system through the ATM, the user completing its transaction, such as requesting money or cash using the user interface being displayed -to his eyes only- through the see-through glasses, can remain confident of the security of the transaction. In one example, the user first may be asked to enter the amount of money he/she needs or wants to withdraw followed by his/her client or card identifier and a secret pin code or secure password.

It should be noted that a secured connection may be established between the user's device and an account manager (user's bank company) server when using certain equipment such as the ATM. In the example used, the ATM machine that is being used may belong to a different bank than where the user's account is located. In such a case, the ATM machine (hereinafter the host ATM) will then initiate the process by providing information required during the first user's request to indicate ATM coordinates (bank company, address of the host ATM). A transaction is then initiated with the user's bank via the host ATM. When the user verification is achieved, the account manager server can communicate with the ATM to inform the user is authorized to withdraw the requested amount of money, and to physically manage the delivery process and the money is then dispensed from the ATM.

The virtual keyboard can be selectively adjusted to the type of transaction. In one embodiment, it may even be personalized to only present a subset of keys but nevertheless these will be presented in different random orders each time. In either case, the virtual keys presented to the user have to be adequate to complete a particular transaction. The virtual keys may include a particular set of number(s) and/or character(s) that are required to fulfill the interaction(s) or may include the regular keys provided in a traditional keyboard but in other arrangements. The keys will be correlated to what is currently available in a physical transaction scenario, in one embodiment. While the required keys will be displayed to the user on the visual screen renderer, location of actionable virtual key(s) follows a random layout which is different than what is presented on a conventional physical display. For example, the number key(s) may be not look spatially ordered like on a basic numerical keyboard such as 7,8,9,4,5,6,1,2,3 but for instance such as 4,0,2,1 to selectively make visual selection more desirable and provide better access. In addition, in some embodiments, the virtual keys may include extra keys extending the apparent number of code combination the user may use.

At times, a trade-off may have to be made between the apparent visual complexity of the rendered keyboard and user-friendly interface requirements. In one embodiment, the user can selectively customize the keyboard. However, even in this embodiment, the duplication of identical keys in the virtual keyboard may be avoided. In a different embodiment, keys that get repeated or somehow are designated as having an important role, such as those used for validation purposes, back or cancel, correction keys, or even characters belonging to the user's personal code if the interfacing sufficiently with the system, could be repeated more than once as means of distraction. Their location may also be provided selectively, in one embodiment, such that while the random selection is adhered to still the most convenient location is picked as to help the user easier triggering function. This may mean that the keys are provided in a more convenient or closest location to the user's hand such that the virtual key is easy to access during the code entering process and/or final validation.

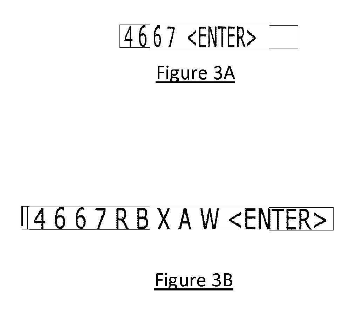

Referring back to Figure 2B, some of the security concerns when typing on a public physical keyboard is alleviated since the randomness of the keyboard provides some measure of protection from unwanted spying which aims code reconstruction through gesture analysis. In one embodiment changing the location of keys used in a regular keyboard can be accomplished by disabling a static keyboard layout analysis approach. For instance, assuming a user has to enter his code pin 4667, Figure 2A depicts the conventional keystroke sequence that a user would need to process on a traditional physical keyboard. In Figure 2B an extended keyboard is shown that is designed specifically for use with a password where only the first characters would be considered in the pin code verification, on the user's bank side for instance, but giving appearance of the longer pin code (or password) being entered, if someone's spying the user's gestures. This can be viewed in more detail by looking at Figures 3A and 3B.

In Figure 3A, the pin code key stroke is captured using a conventional embodiment such as Figure 2A. By contrast, Figure 3B provides for an apparent extended pin code containing distracting numbers are provided that are disposed at the end to camouflage the real code. This random adding of keys to extend the length of the actual code can be also combined with methods that allow the user to avoid repeating number/character sequences of a pin code or password (also a cause for security concerns.) Each time a user virtually types a number (or a character) of user's pin code (or password), the layout of the virtual keyboard may be partially or fully updated and redrawn, to avoid external observer to detect real number or character repetition in the user's -virtual- key strokes (or possibly letting, such observer wrongly detecting such repeating character or sub sequence).

Figures 1 through 4, taken in conjunction with one another, in one embodiment an augmented reality (AR) interactive system that comprises a user interface configured to receive user input. A processor (e.g., processor 140) is configured to manage user input data, and the video camera and the display are in processing communication with one another and the user interface via the processor. The processor is operative to initiate communication with at least one third party computer to start a user session and to display graphical images and textual information in overlying registration using the camera and display so that said images and text appear as part of a plurality of computer keys of a computer keyboard. The computer keys appear in random order each time they are displayed.

In a different embodiment, a method of providing authentication using an augmented reality system is provided. The method comprises initiating, via a processor, a user session. The processor displaying graphical images and textual information in overlying registration with imagery from a video camera to a user, such that the images and textual information appear as part of a computer key from a computer keyboard on a rending surface of a head mounted user device.

The method also comprises registering via the processor user key selection through user movements or voice captured by motion sensor and/or microphone. The motion sensor and microphone is in processing communication with said processor. The processor authenticates the user session by providing user input of selected keys in same order received to the at least third party computer.

In yet another embodiment, an augmented reality (AR) interactive system is provided that comprises a head mounted user interface enabled to receive user input. The head mounted user interface has a motion sensor, a microphone and a touch interaction area for capturing user input in forma of voice, movement or touch. A video camera and a display is also provided that are in processing communication with one another and the user interface via said processor. The processor is operative to initiate a user session and to display graphical images and textual information in overlying registration using the video camera and the display. The images and textual information appear as part of a plurality of computer keys of a computer keyboard. The computer keys appear in random order each time they are displayed.

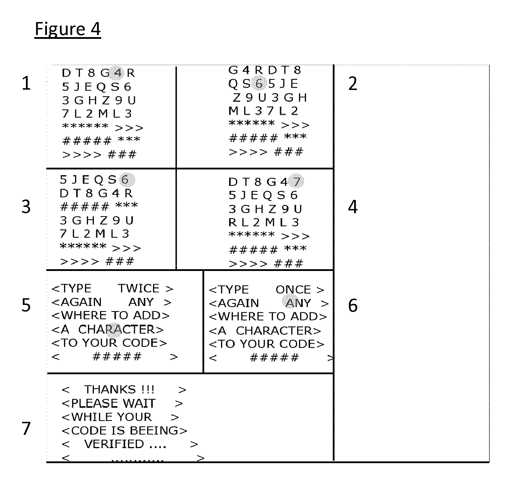

Figure 4 provides an exemplary depiction of one embodiment illustrating succeeding screen captures and showing user keystrokes via the virtual keyboard layout of embodiment of Figure 2B. The highlighted numbers and characters show user's selection in each case as was in the case of Figure 2B. The succession of keyboard entries are captured by simulated exemplary screen captures 1 through 7. Extra character(s) are added to the keyboard to simulate an apparent elongated password. It should be noted that in this embodiment, the extra characters could be inserted between two valid values (e.g. between the "4" and the "6") to make the code much harder to be decoded. The characters are randomly displayed and each character changes location accordingly from one screen to another as discussed previously. More elaborate character(s) selection strategy could also aim to maintain a wide spread of user's gesture(s) regarding the virtual keyboard layout, by selecting character(s) having key(s) distant from each other in the current keyboard layout. This will cause the enhanced system reliability and user experience. Beside the password or pin code entrance protection proposed above, the dynamic layout may be enhanced to become more convenient for the user using his see-through glasses for entering it. At the same time, it is possible to help the system to better recognize the virtual key(s) the user is striking, when this striking analysis is typically done by using video camera embedded in these glasses. Such camera is so potentially affected by ambiguity of virtual keys occlusion by the user hand during the process of keystroke analysis.

In Figure 4, the user would execute 6 virtual key strokes, for entering his 4 digits pin code that contains twice the code 6. But seen from an external observer, the pin code could seem to be 6 characters-long, and he could think the 3rd and 4th characters being the same (as the number 7 and 6 are keeping the same virtual location in the screens 3 and 4) which is completely wrong in fact, and moreover he would also miss the number 6 being present twice in the code, as its apparent location was changed between screen 2 and 3.

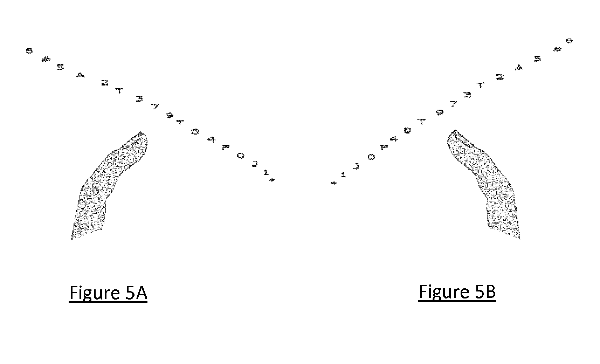

In addition, detecting if the user is left or right handed (by video image analysis and left or right hand use detection), the virtual keyboard layout may be dynamically updated and being presented not as a usual keyboard grid, but instead as a curved aligned sequence of virtual keys, with minimal occlusion for the gesture analysis system and from the user point of view, even when user's hand is close to any virtual key(s). This is shown by the examples of Figures 5A and 5B. In the embodiment of Figures 5A and 5B, left hand and right hand virtual keyboards are provided and location of keys are adjusted to provide maximum user convenience.

The embodiments shown in Figures 1-5 minimize the risk for a user to compromise his secure code during an interactive transaction that requires him to enter that code in a system through a human-machine interface. It replaces the need for a public keyboard -and its attached location- having the risk of potential hijack or spying attempts, at a cost of a -typically personal-see-through glasses for the user, that may be also used for other entertainment use, and not only security payment purpose. It also allows a user to secure a transaction using a personal code without any need to be suspicious of spying or unauthorized interception.

## Claims

1. An augmented reality(AR) interactive system (100), comprising:
a user interface (110) configured to receive user input;
a processor (140) configured to manage data based on user input received by said user interface ;
a display (130) in processing communication with said user interface via said processor (140);
said processor (140) operative to perform the following functions:
a) initiate a user session; and
b) display graphical images and textual information in overlying registration using said display so that said images and textual information appear as part of a plurality of computer keys of a computer keyboard, wherein said computer keys appear in random order each time they are displayed.

2. The augmented reality system (100) of claim 1, wherein user input includes key selection input and said user interface is configured to provide said data based on said key selection input.

3. The augmented reality system (100) of claim 2, wherein said processor is configured to use said key selection input to initiate an authenticated user session with a third party computer.

4. The augmented reality system (100) of any one of claims 1 to 3, wherein said user interface includes a microphone (180) and a motion sensor (170) configured to register user selection through movement, voice or movement and voice.

5. The augmented reality system (100) of any one of claims 1 to 4, wherein said user interface (110) includes an interaction area (160) configured to register user selection through touch.

6. The augmented reality system of claim 4, wherein said user interface (110) further includes a touch interaction area (160) configured to register user selection through touch.

7. The augmented reality system of any one of claims 1 to 6, wherein said display (130) is configured to display graphical images on at least one rendering screen in proximity to an eye of the user, said rendering screen mechanically coupled to an eyeglass frame (120) wearable by a user.

8. The augmented reality(AR) interactive system (100) of any one of claims 1 to 7, wherein the user interface is a head mounted user interface (110) having a motion sensor (170), a microphone (180) and a touch interaction area (160) configured to capture user input in form of a voice, movement or touch.

9. The augmented reality system (100) of claim 8, wherein said display (130) is configured to display graphical images on at least one rendering screen in proximity to an eye of the user, said rendering screen mechanically coupled to an eyeglass frame (120) wearable by said user.

10. The augmented reality system (100) of claim 9, wherein said processor (140) is configured to display a plurality said computer key images simultaneously to said user.

11. The augmented reality system (100) of claim 10, wherein said processor (140) is configured to display different types of computer key images to said user simultaneously.

12. The augmented reality system (100) of claim 11, wherein said processor (140) determines type and number of computer keys required for a particular transaction before displaying at least a subset of said required computer key images to said user.

13. The augmented reality system (100) of claim 12, wherein said processor is configured to display N number of said keys to said user when N is a minimum number of keys required to authenticate said session.

14. A method of providing authentication using an augmented reality system (100), comprising:
initiating authentication of a user session via a processor (140);
displaying via said processor graphical images and textual information in overlying registration with imagery from a camera to a user, such that said images and said textual information appear computer key images from a computer keyboard on a rendering surface of a head mounted user device;
registering via said processor user key selection through user movements or voice captured by motion sensor and/or microphone; wherein said motion sensor and/or microphone is in processing communication with said processor;
said processor authenticating said user session by providing said registered user key selection of selected keys in same order received to at least third party computer such that said user session can be established.

15. An augmented reality(AR) interactive system (100), comprising:
user interface means (110) configured to receive user input in form of voice, movement or touch;
display means (130) in processing communication with a processor (140); said processor operative to perform the following functions:
a) initiate a user session; and
b) display graphical images and textual information in overlying registration using said display means so that said images and said textual information appear as a plurality of computer keys of a computer keyboard, wherein said processor is configured to display said computer keys in random order each time said keys are displayed.
